# EUROPEAN PATENT SPECIFICATION

(11) **EP 2 736 158 B1**
(45) Date of publication and mention of the grant of the patent: **20.05.2020**
(21) Application number: 12194537.2
(22) Date of filing: 28.11.2012
(51) Int. Cl.: H02M 3/337, H02M 1/32

(54) **Resonant converter**
Resonanzwandler
Convertisseur résonant

(30) Priority: 26.11.2012 KR 20120134292
(43) Date of publication of application: 28.05.2014
(73) Proprietor: Korea Electrotechnology Research Institute, Changwon-si Gyeongsangnam-do 641-120 (KR)
(72) Inventor: Ryoo, Hong Je, 642-778 Gyeongsangnam-do (KR); Jang, Sung Roc, 642-800 Gyeongsangnam-do (KR); Kim, Jong Soo, 642-939 Gyeongsangnam-do (KR); Rim, Geun Hie, 641-822 Gyeongsangnam-do (KR)
(74) Representative: Charrier Rapp & Liebau

(56) References cited:
- DE-B- 1 161 353
- US-A- 3 444 452
- US-A- 5 610 508
- US-A1- 2005 007 034
- US-A1- 2006 279 974
- US-A1- 2007 115 700
- US-A1- 2011 103 112
- Mohan Undeland Robbins: "Power Electronics Converters, Applications, And Design", 2003, John Wiley & Sons, XP002731171, ISBN: 0-471-42908-2 * pages 188,189 * * page 249 * * page 269 * * page 507 * * page 669 *
- MAMMANO B: "Current Sensing Solutions for Power Supply Designers", INTERNET CITATION, 1997, pages 1-34, XP002550262, Retrieved from the Internet: URL:http://focus.ti.com/lit/ml/slup114/slu p114.pdf [retrieved on 2009-10-12]

## Description

### BACKGROUND

### (a) Technical Field

The present invention relates to a resonant converter according to the preamble portion of claim 1. More particularly, the present invention relates to a resonant converter with a circuit for improving efficiency and balancing a voltage of a rectifier, which can reduce a conduction loss and a switching loss by improving the waveform of a resonant current and can maintain the voltage balance of rectifier diodes in a rectifier.

### (b) Background Art

DC/DC converters that convert an input DC voltage into an output DC voltage with different levels have been widely used. DC/DC converters generally convert a DC voltage into an AC voltage, and then raise or drop the voltage with a transformer and again rectify the AC voltage into a DC voltage.

There are many circuit systems for implementing such DC/DC converters. One as such is a resonant converter.

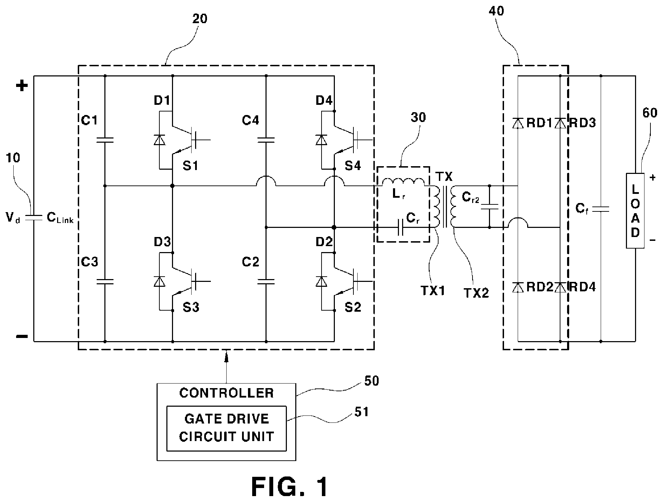

FIG. 1 is a circuit diagram illustrating a configuration of a typical resonant converter. The resonant converter uses the resonance phenomenon of an inductor Lᵣ and a capacitor Cᵣ, and shows good conversion efficiency.

Referring to FIG. 1, a typical resonant converter includes a switching unit 20, an LC resonance circuit unit 30, a transformer TX, a bridge rectifying unit 40, and a gate drive circuit unit 51. The switching unit 20 includes a plurality of switches S1 to S4 converting a DC voltage supplied from an input power supply 10 into an AC voltage by alternate switching. The LC resonance circuit unit 30 is connected to the switching unit 20 to convert the frequency characteristics of the AC voltage delivered from the switching unit 20 using the resonance phenomenon of the resonance inductor Lᵣ and the resonance capacitor Cᵣ connected in series. The transformer TX with a certain turns ratio converts an AC voltage, i.e., a primary voltage delivered from the LC resonance circuit unit 30 into a certain level of secondary voltage. The bridge rectifying unit 40 rectifies the AC voltage induced at the secondary side of the transformer TX into a DC voltage. The gate drive circuit 51 controls the switching operation of the switching unit 20 to control the magnitude and form of a load current.

A capacitor C_{f} is further added to filter and apply the DC voltage rectified by the bridge rectifying unit 40 to a load 60.

The converter shown in FIG. 1 is a full-bridge converter in which four switches S1 to S4 implemented by semiconductor switches such as Insulated Gate Bipolar Transistors (IGBTs) and Metal-Oxide-Semiconductor Field-Effect Transistors (MOSFETs) are connected in a full-bridge structure. Anti-parallel diodes D1 to D4 and snubber capacitors C1 to C4 are connected in parallel to both ends of the switches S1 to S4 of the switching unit 20.

In the switching unit 20, pairs of switches S1 and S2 or S3 and S4 that are diagonally disposed are simultaneously turned on or off according to the driving signal of the gate drive circuit unit 51 to convert a DC voltage into an AC voltage and then deliver the AC voltage into the primary side of the transformer TX through the LC resonance circuit unit 30.

The LC resonance circuit unit 30 connected to the switching unit 20 includes the resonance inductor Lᵣ and the resonance capacitor Cᵣ connected in series to the primary winding TX1 of the transformer TX between the connection node of the switches S1 and S3 and the connection node of the switches S2 and S4. The LC resonance circuit unit 30 stores energy through a resonance tank including the resonance inductor Lᵣ and the resonance capacitor Cᵣ using the LC resonance phenomenon and then deliver the energy to the output.

Also, the transformer TX having the primary winding TX1 connected to the LC resonance circuit unit 30 converts the resonance voltage delivered from the LC resonance circuit unit 30 into a certain level of voltage according to the turns ratio and outputs the voltage through the secondary winding TX2.

Next, the transformed AC voltage outputted from the secondary winding TX2 is converted into a DC voltage by rectifier diodes RD1 to RD4 of the bridge rectifying unit 40, and then is filtered by the capacitor C_{f} to be outputted to the load 60.

In this driving and power conversion process of the converter, the gate drive circuit unit 51 controls the turning-on/off of the switches S1 to S4. The gate drive circuit unit 51 generates and outputs a driving signal (gate signal) for turning on/off the switches S1 to S4 using a pulse voltage signal as an input signal.

In the switching operation of the power semiconductor switches S1 to S4 used in the converter, since the voltage and current vary in delay and gradient according to the switching element, when the switches S1 to S4 are turned on/off, a section (in which the voltage and current overlap) to which the voltage and current are simultaneously applied occurs. In this section, a switching loss corresponding to the product (V X I) of the voltage and the current occurs.

Particularly, in an element such as IGBT, since a tail current flows during a certain section even after a voltage is sufficiently applied on the both ends of the switch upon turning-off, the switching loss is very high upon turning-off.

The switching loss reduces the efficiency of the converter and generates heat as much as lost energy in the switch in which energy is being consumed. Since the switching loss increases in proportion to the frequency at which the element is switched, the switching loss becomes a factor that limits the maximum switching frequency of the element.

Accordingly, various methods for reducing the switching loss have been proposed. Examples of these methods include Zero-Voltage Switching (ZVS) in which switching is performed when a voltage is zero, Zero-Current Switching (ZCS) in which switching is performed when a current is zero, and Zero-Voltage and Zero-Current Switching (ZVZCS) in which ZVS and ZCS are both performed.

In order to achieve ZVS, ZCS, and ZVZCS that reduce the switching loss, as shown in FIG. 1, the inductor Lᵣ and the capacitor Cᵣ are connected to the primary side of the transformer TX to configure a load resonant converter using the LC resonance phenomenon. The use of the LC resonance phenomenon enables voltage and current waveforms that satisfy the zero voltage and zero current conditions. Also, since the resonance circuit of the inductor Lᵣ and the capacitor Cᵣ generates oscillating of load voltage and current, ZVS, ZCS and ZVZCS are enabled.

Upon turning-on the switch at the same frequency operation condition in the above-mentioned resonant converter, when a resonant current (i_{L}) rapidly increases to improve the resonant current waveform closely to a square wave, the effective value of the current increases, and thus the efficiency of the converter also increases.

Thus, a method of increasing the efficiency of the converter by inducing a rapid rise of the resonant current (i_{L}) is needed.

Also, the converter of FIG. 1 shows a simple example of a resonant converter.

in which pairs of rectifier diodes RD1 to RD4 of the rectifying unit 40 are connected in series. However, when the low voltage converter is applied to a high voltage power supply unit (e.g., several kV to several tens of kV), more rectifier diodes need to be connected in series.

However, although a uniform voltage is applied to rectifier diodes with a high voltage rating which are connected in series, actual voltages applied to the both ends of the rectifier diodes may vary due to an impedance difference, and it is difficult to maintain the voltage of all rectifier diodes at a uniform level.

Accordingly, in the case of application of a high voltage, an additional circuit configuration that can maintain the voltage balance is needed to apply a uniform level of voltage to rectifier diodes connected in series in the rectifying unit.

When the gate drive circuit or the controller does not normally operate, hard switching may occur in a switch of the converter and thus a significant switching loss may occur, causing heat generation or output reduction.

Furthermore, due to problems in controlling or switching signal during the operation of the converter, leg-short such as short-circuit in at a DC link may occur in the circuit of the converter.

Thus, a fault detection and protection circuit is needed to detect and protect against hard switching or leg-short.

Document KR 101 000 561 B1 relates to a serial resonant type converter being provided to reduce switching loss by arranging a separate capacitor in the secondary side of a transformer. A switching part converts a DC voltage into an AC voltage. A LC resonance circuit part converts the frequency characteristic of the AC voltage transferred from the switching part. A transformer converts the AC voltage that is transferred from the LC resonance circuit part, to the secondary side voltage at a fixed level. A secondary side capacitor is connected to the secondary side of the transformer in parallel to the transformer. A bridge rectification circuit part rectifies the AC voltage, which is induced to the secondary side of the transformer, into a DC voltage. A gate driving circuit part controls the size and shape of a load current by controlling the switching operation of the switching part.

The above information disclosed in this Background section is only for enhancement of understanding of the background of the invention.

### SUMMARY OF THE DISCLOSURE

The present invention provides a high efficient resonant converter, which can improve the waveform of a resonant current showing upon switching operation, and thus can reduce a conduction loss and a switching loss and increase the efficiency.

The present invention also provides a converter including a simple circuit configuration which can maintain the voltage balance with respect to rectifier diodes in a rectifying unit upon application of a high voltage, and a fault detection and protection circuit which can detect and protect against hard switching or leg-short.

The present invention provides a resonant converter according to claim 1.

In another embodiment, the detection unit includes two transformers including the first current sensing circuit and the second current sensing circuit disposed at a primary side thereof and including secondary coils connected in series to each other, and the second coils of the transformers connected in series may be connected to the signal processing unit.

In still another exemplary embodiment, the secondary coils of the transformers connected in series are connected to a grounding resistor, and the signal processing unit includes a comparator that compares a voltage value inputted via the secondary coils of the transformer connected in series with a reference value to output a signal.

In yet another exemplary embodiment, the comparator is connected to a controller, and the controller is configured to determine that the abnormality occurs in the converter using the signal of the comparator outputted when the voltage inputted via the secondary coils is equal to or greater than the reference value.

In still yet another exemplary embodiment, the controller is configured to turn off the switches of the full-bridge inverter unit through a gate drive circuit unit when the controller determines that the abnormality occurs in the converter.

In a further exemplary embodiment, the transformers are configured to include cores wound with the secondary coils insulatedly attached to a printed circuit board including the first current sensing circuit and the second current sensing circuit formed thereon.

The cores have a 'U'-shape, and are fixedly attached to the printed circuit board at end portions of legs of the cores such that middle portions of the cores wound with the secondary coils cross over patterns of the circuits on the printed circuit board.

Other aspects and exemplary embodiments of the invention are discussed infra.

### BRIEF DESCRIPTION OF THE DRAWINGS

The above and other features of the present invention will now be described in detail with reference to certain exemplary embodiments thereof illustrated the accompanying drawings which are given hereinbelow by way of illustration only, and thus are not limitative of the present invention, and wherein:
FIG. 1 is a view illustrating a circuit configuration of a typical resonant converter;
FIG. 2 is a view illustrating a circuit configuration of a resonant converter according to an embodiment of the present invention;
FIG. 3 is a view illustrating a comparison of resonant current waveforms of a typical resonant converter and a resonant converter according to an embodiment of the present invention;
FIG. 4 is a perspective view illustrating a transformer of a failure detection circuit in a converter according to an embodiment of the present invention;
FIG. 5 is a view illustrating primary currents of two transformers of a failure detection circuit upon normal operation in a converter according to an embodiment of the present invention;
FIG. 6 is a view illustrating primary voltages of transformers of a failure detection circuit upon normal operation in a converter according to an embodiment of the present invention;
FIG. 7 is a view illustrating an input voltage of a comparator of a failure detection circuit upon normal operation in a converter according to an embodiment of the present invention;
FIG. 8 is a view illustrating primary currents of transformers of a failure detection circuit upon occurrence of hard switching in a converter according to an embodiment of the present invention;
FIG. 9 is a view illustrating primary voltages of transformers of a failure detection circuit upon occurrence of hard switching in a converter according to an embodiment of the present invention;
FIG. 10 is a view illustrating an input voltage of a comparator of a failure detection circuit upon occurrence of hard switching in a converter according to an embodiment of the present invention;
FIG. 11 is a view illustrating primary current of transformers of a failure detection circuit upon occurrence of leg-short in a converter according to an embodiment of the present invention;
FIG. 12 is a view illustrating primary voltages of transformers of a failure detection circuit upon occurrence of leg-short in a converter according to an embodiment of the present invention; and
FIG. 13 is a view illustrating an input voltage of a comparator of a failure detection circuit upon occurrence of leg-short in a converter according to an embodiment of the present invention.

Reference numerals set forth in the Drawings includes reference to the following elements as further discussed below:

| | |
|---|---|
| 1 : PCB | 10 : input power supply |
| 20 : switching unit | 21 : first circuit |
| 22 : first transformer | 22a : primary coil |
| 22b : core | 23 : second circuit |
| 24 : second transformer | 24a : secondary coil |
| 24b : core | 26 : comparator |
| 30 : LC resonance circuit unit | 40 : rectifying unit |
| 50 : controller | 51 : gate drive circuit unit |
| 60 : load | |
| S1 ∼ S4 : switch | D1 ∼ D4 : anti-parallel diode |
| C1 ∼ C4 : snubber capacitor | TX : transformer |
| Lᵣ : resonance inductor | Cᵣ : resonance capacitor |
| RD : rectifier diode | C_{b} : capacitor |
| R : resistor | |

It should be understood that the appended drawings are not necessarily to scale, presenting a somewhat simplified representation of various preferred features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION

Hereinafter reference will now be made in detail to various embodiments of the present invention, examples of which are illustrated in the accompanying drawings and described below. While the invention will be described in conjunction with exemplary embodiments, it will be understood that present description is not intended to limit the invention to those exemplary embodiments. The scope of the invention is defined by the appended claims.

The above and other features of the invention are discussed infra.

Hereinafter, exemplary embodiments of the present invention will be described in detail with reference to the accompanying drawings so that those skilled in the art can easily carry out the present invention.

The present invention provides a high efficient resonant converter, which can improve the waveform of a resonant current showing upon switching operation, and thus can reduce a conduction loss and a switching loss and increase the efficiency.

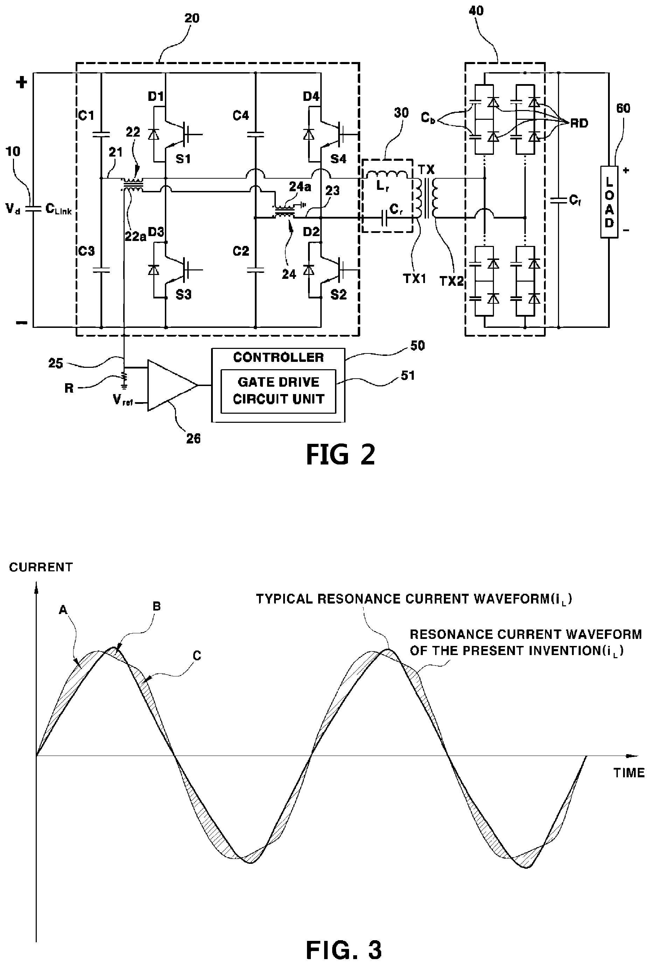

FIG. 2 is a view illustrating a circuit configuration of a high efficient resonant converter according to an embodiment of the present invention.

First, in this embodiment, capacitors C_{b} may be added to a rectifying unit 40 to improve the waveform of a resonant current and maintain the voltage balance of rectifier diodes RD.

The capacitors C_{b} may be provided to improve the current waveform and the voltage balance, and may be disposed between the rectifier diodes RD constituting the rectifying unit 40.

Referring to FIG. 2, when the converter is applied to a high voltage power supply unit, more rectifier diodes RD have to be connected in series (series stacking) in the rectifying unit 40 compared to the example of FIG. 1.

In this case, the voltage balance of the rectifier diodes RD needs to be maintained. In this embodiment, the capacitor C_{b} for improving the current waveform and balancing the voltage may be connected for every rectifier diode RD connected in series.

The capacitor C_{b} may basically serve to maintain the voltage balance (keep the voltage level of the rectifier diodes RD connected in series at a uniform level) and improve the waveform of a resonant current i_{L}.

The present applicant and inventor owns Korean Patent No. 10-1000561, which discloses a resonant converter that can reduce a conduction loss and a switching loss and shows high efficiency by improving the waveform of a resonant current. The resonant converter disclosed in this registered patent (hereinafter, referred to as prior patent) improves the waveform of the resonant current by adding one capacitor connected in parallel to the secondary side of a transformer TX.

In this embodiment, instead of adding one capacitor to the secondary coil of the transformer like in the prior patent, capacitors C_{b} may be connected to both ends of rectifier diodes RD connected in series, respectively. Thus, the capacitor C_{b} of each rectifier diode RD may basically serve to maintain the voltage balance among all the rectifier diodes RD and may serve as a secondary capacitor in the prior patent, i.e., improving the waveform of the resonant current of the converter.

In brief, the capacitor C_{b} for maintaining the voltage balance of the rectifier diode RD may be used as a capacitor for improving the waveform of the resonant current of the converter. Thus, a circuit that simultaneously enables the voltage balancing of the rectifier diode RD, the improvement of the current waveform, and the improvement of the converter efficiency can be implemented only by simply adding the capacitor C_{b} to each rectifier diode RD.

The basic operation process of each element and circuit shown in FIG. 2 is similar to that of a well-known resonant converter.

Basically, a gate drive circuit unit 51 may apply a driving signal (gate signal) for turning on/off switches S1 to S4 in a switching unit 20. When pairs of switches S1 and S2 or S3 and S4 diagonally disposed in the switching unit 20 are simultaneously turned on/off in time, a DC voltage is converted into an AC voltage to be delivered to the secondary side of the transformer TX via a LC resonance circuit unit 30. Since each phased mode operation performed by such switching control is already well known in the prior patent, a detailed description thereof will be omitted herein.

Due to an influence of the capacitor C_{b} disposed on both ends of each rectifier diode RD connected in series in the converter according to this embodiment, the primary resonant current i_{L} can be more rapidly increased than a typical converter, and thus a current waveform of a trapezoidal shape can be obtained, increasing an effective current compared to an existing current waveform of a sinusoidal wave during the same frequency operation.

FIG. 3 is a view illustrating a comparison of resonant current i_{L} waveforms of a typical resonant converter and a resonant converter according to an embodiment of the present invention. Due to rapid rise of the current i_{L} compared to a typical resonant converter, the resonant converter according to this embodiment can increase the effective current as much as an oblique-lined portion (A+C-B) at the same switching frequency, improving the efficiency.

In this embodiment, an effective high voltage converter can be achieved by simply connecting a capacitor to both ends of a rectifier diode RD to allow the capacitor for improving the current waveform and improving the efficiency to be used in a voltage balance compensation circuit of a high voltage rectifier circuit.

The converter according to this embodiment may further include a failure detection circuit that can detect hard switching of each switch in the switching unit and occurrence of leg-short in the converter.

The hard switching may be construed as including all abnormal cases where, for example, the gate drive circuit unit 51 or the controller 50 does not normally operate due to failure or normal soft switching is not performed. For example, although the switches S1 to S4 have to be turned on by a gate signal outputted from the gate drive circuit unit 51 at on-state (zero-voltage state at both ends of the switch) of anti-parallel diodes D1 to D4 after complete discharging of snubber capacitors C1 to C4, the hard switching includes a case where a current rapidly increases by turning on the switching when the discharging of the snubber capacitors C1 to C4 are not completely performed and when a voltage remains on both ends of the switches S1 to S4.

The converter may include the failure detection circuit for detecting failure and abnormality such as leg-short of the circuit therein in addition to the hard switching. The failure detection circuit may include a detection unit for detecting the abnormality such as hard switching or leg-short and a signal processing unit for processing a signal of the detection unit to generate a signal indicating whether or not abnormality occurs.

Hereinafter, the basic principle of detecting abnormality such as hard switching or leg-short occurring in the converter will be described. The pairs of switches S1 and S2 or S3 and S4 diagonally disposed may be turned on/off by the gate signal in the resonant converter shown in FIG. 2, and the pairs of snubber capacitors C1 and C2 or C3 and C4 diagonally disposed may also be simultaneously charged or discharged.

In the process in which the switches S1 and S2 are simultaneously turned off, the snubber capacitors C3 and C4 are discharged and the snubber capacitors C1 and C2 are charged. Here, the snubber capacitors C3 and C4 are completely discharged, and the switches S1 and S2 are completely turned off. Thereafter, at on-state of the anti-parallel diodes D3 and D4, a turn-on gate signal may be applied to turn on the switches S3 and S4.

On the other hand, in the process in which the switches S3 and S4 are simultaneously turned off, the snubber capacitors C1 and C2 are discharged and the snubber capacitors C2 and C3 are charged. Here, the snubber capacitors C1 and C2 are completely discharged, and the switches S3 and S4 are completely turned off. Thereafter, at on-state of the anti-parallel diodes D1 and D2, a turn-on gate signal may be applied to turn on the switches S1 and S2.

In this operation mode, as shown in FIG. 2, a circuit connecting between a connection node of the two switches S1 and S3 in the switching unit 20 and a connection node of the two snubber capacitors C1 and C3 connected in parallel to the two switches S1 and S3 may be called a first circuit 21, and a circuit connecting between a connection node of the other switches S2 and S4 and the other snubber capacitors C2 and C4 connected in parallel to the other switches S2 and S4 may be call a second circuit 23. When the converter is in normal operation state, currents flowing in the first circuit 21 and the second circuit 23 may be equal in magnitude but opposite in direction. Also, the voltages at the two circuits 21 and 23 may be equal in magnitude but opposite in polarity.

On the other hand, upon occurrence of hard switching or leg-short, the current magnitude of the first circuit 21 and the current magnitude of the second circuit 23 may become different, and the magnitude of the voltages between the two circuits 21 and 23 may also become different from each other.

Thus, when the sum of currents flowing in the first circuit 21 and the second circuit 23 or the sum of voltages at the first circuit 21 and the second circuit 23 is measured to be equal to or greater than zero, it can be considered that abnormality such as hard switching or leg-short has occurred.

Based on this point, the converter according to this embodiment may be provided with a circuit configuration for detecting abnormality of the converter such as hard switching or leg-short, i.e., a failure detection circuit including a detection unit for detecting voltage or current flowing in two circuits and a signal processing unit for processing a detection signal from the detection unit to generate a signal indicating whether or not abnormality occurs.

In an exemplary embodiment, as shown in FIG. 2, the detection unit may include two transformers 22 and 24 in which two circuits connecting the connection nodes, i.e., the first circuit 21 and the second circuit 23 are disposed at the primary side while coils at the secondary side are connected in series to each other.

The transformers 22 and 24 may serve to detect the sum of currents flowing in the first circuit 21 and the second circuit 23 or the sum of voltages applied to the first circuit 21 and the second circuit 23. In this embodiment, the transformers 22 and 24 may be used as the detection unit which can indirectly detect a state where the sum of currents or voltages does not become zero through the current or voltage the secondary coil instead of directly detecting currents or voltage at two circuits.

Hereinafter, the two transformers 22 and 24 may be referred to as a first transformer and a second transformer, respectively. When the secondary coils 22a and 24a of the first transformers 22 and the second transformer 24 are connected in series to each other, the secondary coils 22a and 24a may be finally connected to the signal processing unit.

The transformers 22 and 24 of the failure detection circuit may be implemented with a simple configuration in which cores 22b and 24b wound with the secondary coils 22a and 24a are attached to a Printed Circuit Board (PCB) 1

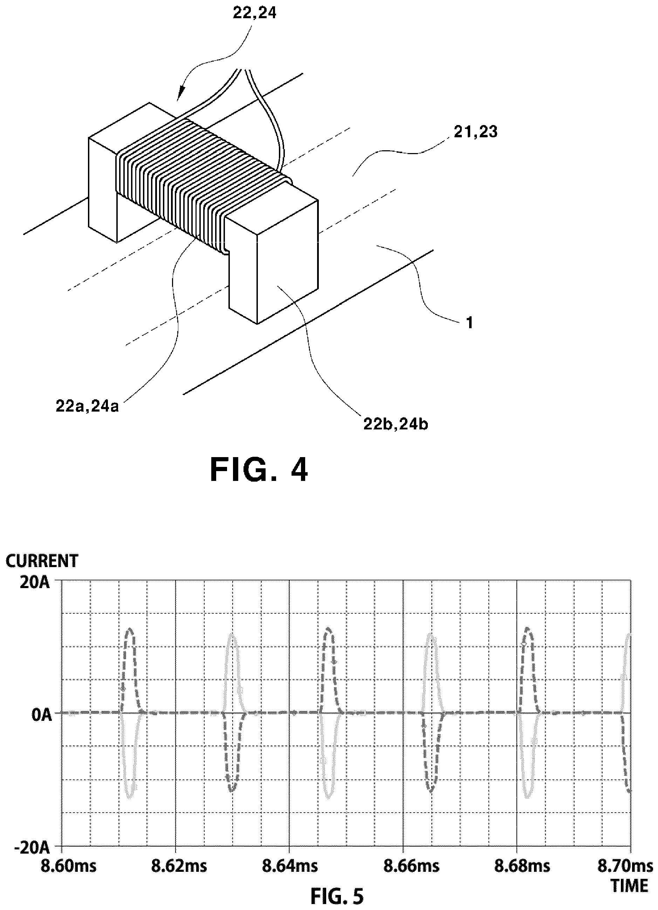

FIG. 4 is a perspective view illustrating a transformer 22 or 24 for detecting abnormality such as hard switching or leg-short in a converter according to an embodiment of the present invention. Referring to FIG. 4, cores 22b and 24b wound with secondary coils 22a and 24a may be attached around the circuit pattern so as not to contact the patterns (copperplate lines) of the first circuit 21 and the second circuit 23 on the PCB 1 mounted with the switches of the switching unit, anti-parallel diodes, and snubber capacitors, respectively.

The cores 22b and 24b may be formed to have 'U'-shape, and may be simply attached to the PCB 1 by fixing the end portions of the legs of the cores 22b and 24b to the PCB 1 with an adhesive.

Also, the cores 22b and 24b may be attached to the PCB 1 so as not to contact the patterns of the first circuit 21 and the second circuit 23, and may be attached such that the middle portion of the cores 22b and 24b wound with the secondary coils 22a and 24 can cross over the patterns of the circuits 21 and 23.

The secondary coils 22a and 24a of the two transformers 22 and 24 wound around the cores 22b and 24 may be connected to each other, and then the secondary output terminal (25 of FIG. 2) that is the end of the coils 22a and 24a connected in series may be connected to a resistor R and a comparator 26. When a current flows along the secondary coils 22a and 24a, the current flowing in the secondary coils 22a and 24a may be allowed to be converted into a voltage signal by the resistor R and then inputted into the comparator 26.

As described above, since the first circuit 21 and the second circuit 23 are disposed at the primary side of the transformers 22 and 24, respectively, two transformers including the first transformer 22 in which the first circuit 21 is disposed at the primary side and the second transformer 24 in which the second circuit 23 is disposed at the primary side may be disposed at different locations.

The signal processing unit may compare the voltage signal applied to the second coils 22a and 24a with a reference value V_{ref} to output a signal indicating whether or not abnormality such as hard switching or leg-short occurs. As shown in FIG. 2, the secondary coils 22a and 24a of the transformers 22 and 24 connected in series may be connected to the grounding resistor R, and thus when a current flows in the secondary coil, a voltage signal corresponding to the current may be applied to the signal processing unit by the resistor R.

Here, the signal processing unit may become the comparator 26 that receives and compares the voltage signal of the secondary coils 22a and 24a connected to the resistor R with the reference value V_{ref} to output a signal indicating whether or not abnormality occurs.

In the above-mentioned configuration including the first transformer 22 and the second transformer 24, when hard switching or leg-short does not occur, an induced secondary voltage of the first transformer 22 and an induced secondary voltage of the second transformer 24 may be equal in magnitude but opposite in polarity, and the sum of the secondary voltages of the two transformers 22 and 24 may become zero. Accordingly, a voltage inputted into the comparator 26 via the output terminal 25 of the secondary coils 22a and 24a connected in series must be zero.

On the other hand, when abnormality such as hard switching or leg-short occurs, there may occur a magnitude difference of the primary voltage and the secondary voltage between the two transformers 22 and 24. A voltage inputted into the comparator 26 via the output terminal 25 of the second coils 22a and 24a connected in series may become a value other than zero.

Accordingly, an appropriate reference value V_{ref} may be set in the comparator 26 to discriminate a case where the voltage signal inputted from the output terminal 25 of the secondary coil to the comparator 26 is zero (normal state) from the other cases (abnormal state such as failure) and output a signal. The comparator 26 may compare the voltage value inputted from the output terminal 25 of the secondary coil of the transformer with the reference value V_{ref}. When the voltage value is smaller than the reference value V_{ref}, the comparator 26 may output a signal indicating the normal state. When the voltage value is equal to or greater than the reference value V_{ref}, the comparator 26 may output a signal indicating the abnormal state such as hard switching or leg-short.

In the above-mentioned failure detection circuit, the comparator 26 may be connected to the controller 50. When the input voltage through the secondary coils 22a and 24a is equal to or greater than the reference value V_{ref}, the controller 50 may receive the output signal of the comparator 26, and may determine that abnormality occurs in the converter.

In this case, the controller 50 may be configured to apply a control signal for turning off the switches S1 to S4 of the switching unit 20 to the gate drive circuit unit 51 to protect the circuit of the converter. Thus, the switches S1 to S4 of the switching unit 20 may be allowed to be turned off (switching off) to protect the circuit of the converter.

Hereinafter, voltages and currents shown in each transformer of the failure detection circuit upon normal operation of the converter and occurrence of abnormality such as hard switching, and leg-short will be compared as follows.

FIG. 5 is a view illustrating primary currents of two transformers 22 and 24 of a failure detection circuit upon normal operation in a converter according to an embodiment of the present invention.

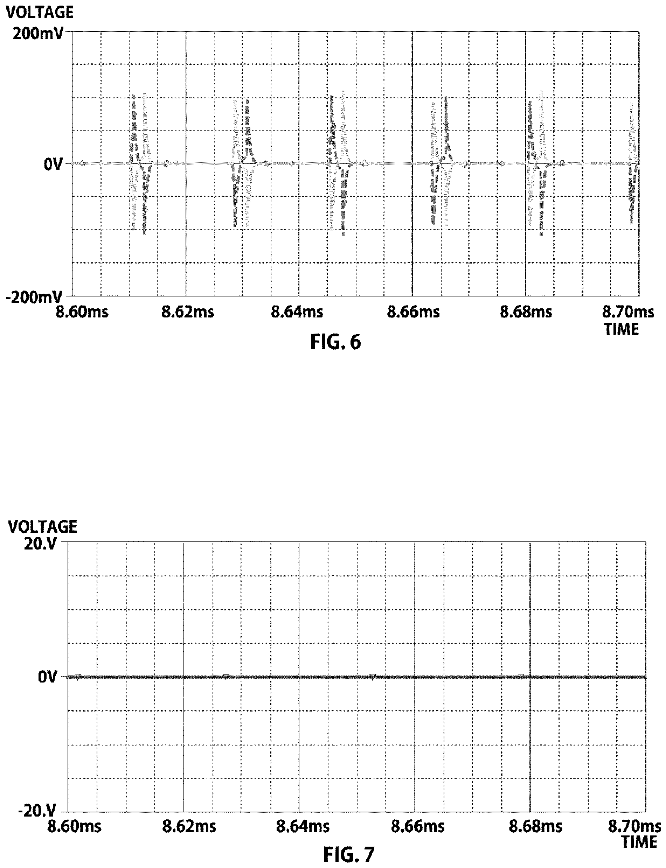

FIG. 6 is a view illustrating primary voltages of two transformers 22 and 24 of a failure detection circuit upon normal operation in a converter according to an embodiment of the present invention. FIG. 7 is a view illustrating an input voltage of a comparator 26 of a failure detection circuit upon normal operation in a converter according to an embodiment of the present invention.

When the converter normally operates, that is, abnormality such as hard switching or leg-short does not occur, as shown in FIG. 5, the magnitudes of the primary currents of the two transformers 22 and 24 may be equal to each other, but the current directions may be opposite to each other.

When the converter normally operates, as shown in FIG. 6, the primary voltages of the two transformers 22 and 24 may be equal to each other in magnitude, but may be opposite to each other in polarity. Although not shown in the drawing, the secondary voltages induced from the primary voltages equal in magnitude and opposite in polarity may also be equal in magnitude but opposite in polarity.

As a result, a voltage inputted into the comparator 26 that is the signal processing unit via the second coils 22a and 24a of the two transformers 22 and 24 may become 0V as shown in FIG. 7.

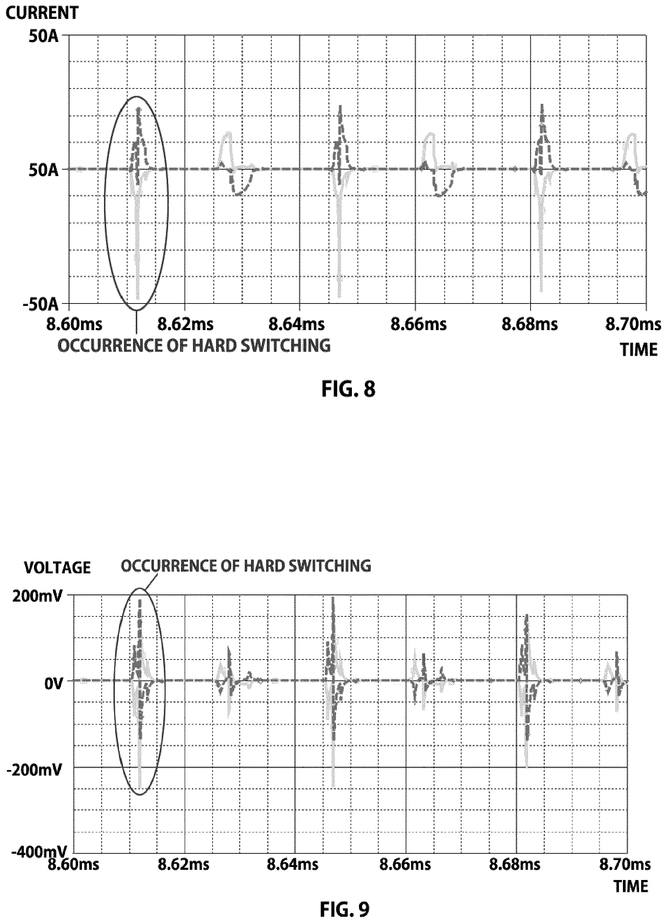

FIG. 8 is a view illustrating primary currents of transformers 22 and 24 of a failure detection circuit upon occurrence of hard switching in a converter according to an embodiment of the present invention

As shown in the drawing, when hard switching occurs, it can be seen that the current balance at the two transformers 22 and 24 is lost and current waveforms are different from those in FIG. 5.

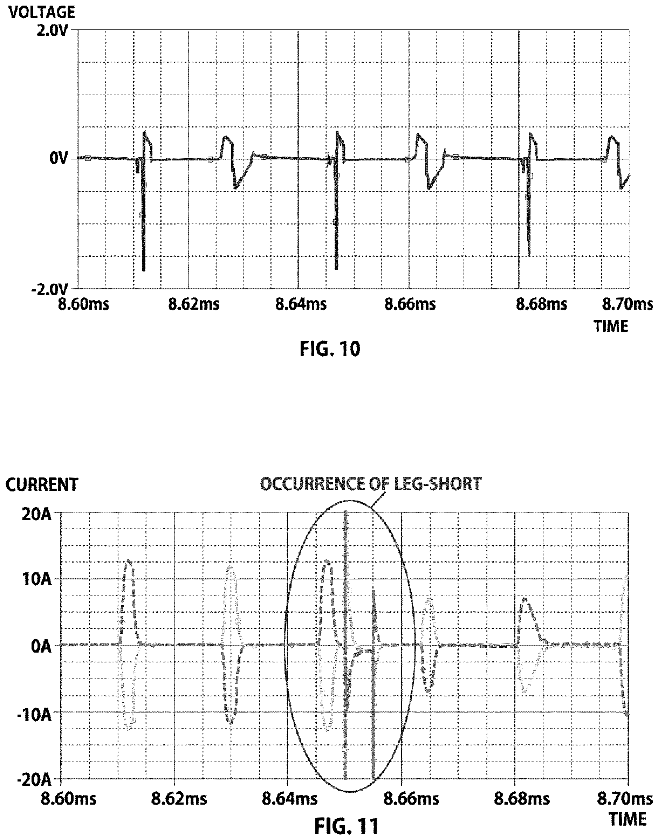

FIG. 9 is a view illustrating primary voltages of transformers of a failure detection circuit upon occurrence of hard switching in a converter according to an embodiment of the present invention. FIG. 10 is a view illustrating an input voltage of a comparator of a failure detection circuit upon occurrence of hard switching in a converter according to an embodiment of the present invention. Upon occurrence of hard switching, a voltage magnitude difference between the two transformers 22 and 24 may distinctively occur at both primary and secondary sides of the transformer.

Thus, the voltage inputted into the comparator 26 via the secondary coils 22a and 24a of the two transformers 22 and 24 connected in series may show a value equal to or greater than the voltage reference value V_{ref}, not zero (0V).

Accordingly, when the voltage inputted through the output terminal 25 of the secondary coil of the transformer is compared with the reference value V_{ref} and is determined to be equal to or greater than the reference value V_{ref}, not 0V, the comparator 26 may determine that hard switching occurs, and may output a signal indicating the occurrence of the hard switching.

When the voltage inputted into the comparator 26 via the second coil of the transformer is 0V or near 0V, that is, the voltage is smaller than the reference value V_{ref}, the comparator 26 may output a signal indicating the normal operation state.

The leg-short detection principle may be similar to the hard switching detection principle described above. FIG. 11 is a view illustrating primary currents of transformers of a failure detection circuit upon occurrence of leg-short in a converter according to an embodiment of the present invention. When leg-short occurs, compared to the normal operation, the current balance at the two transformers 22 and 24 may also be lost, and the current waveforms may be different from those of FIG. 5.

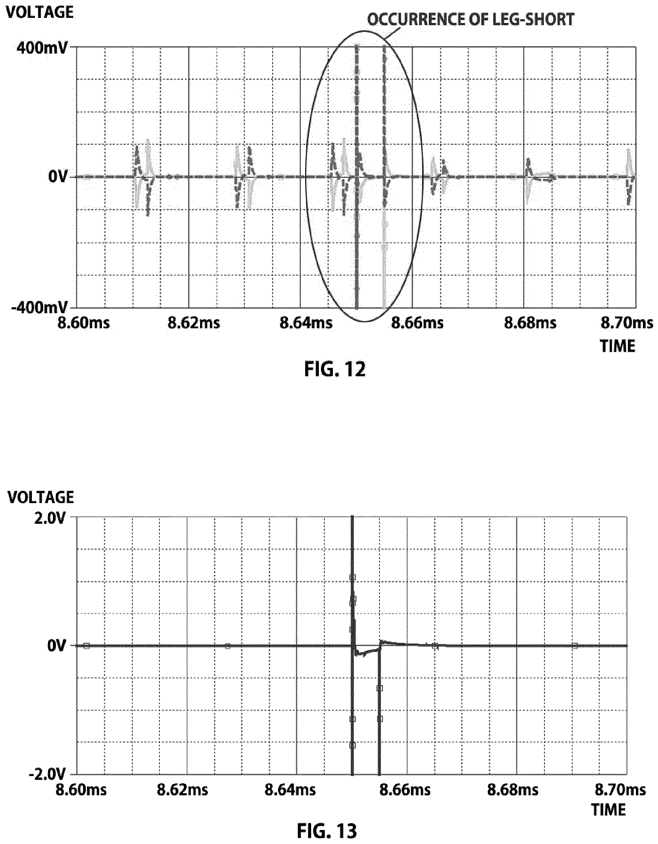

FIG. 12 is a view illustrating primary voltages of transformers of a failure detection circuit upon occurrence of leg-short in a converter according to an embodiment of the present invention. FIG. 13 is a view illustrating an input voltage of a comparator of a failure detection circuit upon occurrence of leg-short in a converter according to an embodiment of the present invention. Even when leg-short occurs, a voltage magnitude difference between two transformers may distinctively occur at both primary and secondary sides of the transformers.

Thus, the voltage inputted into the comparator 26 via the second coils of the two transformers connected in series may show a value equal to or greater than the voltage reference value V_{ref}. Accordingly, when the voltage inputted through the output terminal 25 of the secondary coil of the transformer is compared with the reference value V_{ref} and is determined to be equal to or greater than the reference value V_{ref}, not 0V, the comparator 26 may determine that leg-short occurs, and may output a signal indicating the occurrence of the leg-short.

When the voltage inputted into the comparator 26 via the second coil of the transformer is 0V or near 0V, that is, the voltage is smaller than the reference value V_{ref}, the comparator 26 may output a signal indicating the normal operation state.

According to the failure detection circuit describe above, abnormality such as hard switching or leg-short can be detected to be outputted as a signal during the operation of the converter.

Therefore, it can be detected using the failure detection circuit with a simple configuration including the transformer and the comparator whether or not abnormality occurs in the converter. Also, when the gate signal output of the gate drive circuit unit is controlled according to the output signal of the comparator, i.e., the output signal of the failure detection circuit, for example, when the gate drive circuit unit is configured to turn off the switch of the converter by the signal outputted from the comparator upon occurrence of abnormality or the controller is configured to control the signal output of the gate drive circuit unit, a protection circuit that can automatically protect the converter upon occurrence of abnormality can be achieved.

The invention has been described in detail with reference to exemplary embodiments thereof. However, it will be appreciated by those skilled in the art that changes may be made in these embodiments. The scope of the invention is defined in the appended claims.

## Claims

1. A resonant converter comprising:
a full-bridge inverter unit (20) comprising a plurality of switches S1 to S4 converting a DC voltage into an AC voltage by alternate switching; the full-bridge inverter unit (20) comprising two arms, one arm comprising a first pair of switches in series connection (S1, S3), the other arm comprising a second pair of switches in series connection (S2, S4),
a first connection node is arranged between the first pair of switches (S1, S3), a second connection node is arranged between the second pair of switches (S2, S4),
a series connection of two snubber capacitors (C1, C3) with a third connection node between the capacitors, and
a series connection of two snubber capacitors (C2, C4) with a fourth connection node between the capacitors
is arranged in parallel to the first and second pair of switches,
a series connection of a resonance inductor (Lᵣ) and a resonance capacitor (Cᵣ) is connected between the first and the second connection node;
an LC resonance circuit unit (30) connected to the full-bridge inverter unit (20) to convert frequency characteristics of the AC voltage delivered from the full-bridge inverter unit (20) using a resonance phenomenon of the resonance inductor (Lᵣ) and the resonance capacitor (Cᵣ);
a transformer (TX) comprising a primary winding (TX1) connected to the LC resonance circuit unit (30) and a secondary winding (TX2) with a certain turns ratio with respect to the primary winding (TX1); and
a full-bridge rectifying unit (40) comprising a plurality of rectifier diodes (RD) for rectifying an AC voltage induced at a secondary side of the transformer (TX) into a DC voltage,
wherein the full-bridge rectifying unit (40) comprising the plurality of rectifier diodes (RD) connected in series comprises capacitors (C_{b}) disposed at both ends of each rectifier diode (RD) to improve a waveform of a resonant current and balance voltages between the rectifier diodes (RD); **characterized in**
a failure detection circuit comprising:
a detection unit (22, 24) comprising a first current sensing circuit (21) connecting between the first connection node of the pair of switches (S1, S3) of the full-bridge inverter unit (20) and the third connection node of the pair of snubber capacitors (C1, C3) connected in parallel to the pair of switches (S1, S3) and a second current sensing circuit (23) connected between the second connection node of the other pair of switches (S2, S4) of the full-bridge inverter unit (20) and the fourth connection node of the other pair of snubber capacitors (C2, C4) connected in parallel to the other pair of switches (S2, S4) and detecting current and voltage states of the first current sensing circuit (21) and the second current sensing circuit (23); and
a signal processing unit outputting a signal indicating whether or not an abnormality comprising hard switching of the switches (S1, S2, S3, S4) or leg-short of the circuit inside the converter occurs by comparing the sum of currents flowing in the first current sensing circuit (21) and the second current sensing circuit (23) or the sum of voltages at the first circuit (21) and the second current sensing circuit (23) from a signal of the detection unit (22,24) with a reference value (V_{ref}).

2. The resonant converter of claim 1, wherein the detection unit comprises two transformers (22, 24) comprising the first current sensing circuit (21) and the second current sensing circuit (23) disposed at a primary side thereof and comprising secondary coils (22a, 24a) connected in series to each other, and the second coils (22a, 24a) of the transformers (22, 24) connected in series are connected to the signal processing unit.

3. The resonant converter of claim 2, wherein the secondary coils (22a, 24a) of the transformers (22, 24) connected in series are connected to a grounding resistor (R), and the signal processing unit comprises a comparator (26) that compares a voltage value inputted via the secondary coils (22a, 24a) of the transformer (22, 24) connected in series with a reference value (V_{ref}) to output a signal.

4. The resonant converter of claim 3, wherein the comparator (26) is connected to a controller (50), and the controller is configured to determine that the abnormality occurs in the converter using the signal of the comparator (26) outputted when the voltage inputted via the secondary coils (22a, 24a) is equal to or greater than the reference value (V_{ref}).

5. The resonant converter of claim 4, wherein the controller (50) is configured to turn off the switches (S1, S2, S3, S4) of the full-bridge inverter unit (20) through a gate drive circuit unit (51) when the controller (50) determines that the abnormality occurs in the converter.

6. The resonant converter of claim 2, wherein the transformers (22, 24) is configured to comprise cores (22b, 24b) wound with the secondary coils (22a, 24a) insulatedly attached to a printed circuit board (1) comprising the first current sensing circuit (21) and the second current sensing circuit (23) formed thereon.

7. The resonant converter of claim 6, wherein the cores (22b, 24b) have a 'U'-shape, and are fixedly attached to the printed circuit board (1) at end portions of legs of the cores (22b, 24b) such that middle portions of the cores (22b, 24b) wound with the secondary coils (22a, 24a) cross over patterns of the circuits on the printed circuit board (1).

## Patentansprüche

1. Resonanzwandler, der umfasst:
eine Vollbrücken-Wechselrichtereinheit (20) mit einer Vielzahl von Schaltern S1 bis S4, die eine Gleichspannung in eine Wechselspannung durch abwechselndes Umschalten umwandelt; wobei die Vollbrücken-Wechselrichtereinheit (20) zwei Zweige umfasst, wobei ein Zweig ein erstes Paar von Schaltern in Reihenschaltung (S1, S3) umfasst, der andere Zweig ein zweites Paar von Schaltern in Reihenschaltung (S2, S4) umfasst,
ein erster Verbindungsknoten zwischen dem ersten Paar von Schaltern (S1, S3) angeordnet ist, ein zweiter Verbindungsknoten zwischen dem zweiten Paar von Schaltern (S2, S4) angeordnet ist,
eine Reihenschaltung von zwei Beschaltungskondensatoren (C1, C3) mit einem dritten Verbindungsknoten zwischen den Kondensatoren, und
eine Reihenschaltung von zwei Beschaltungskondensatoren (C2, C4) mit einem vierten Verbindungsknoten zwischen den Kondensatoren
zum ersten und zweiten Paar von Schaltern parallel angeordnet sind,
eine Reihenschaltung eines Resonanzinduktors (Lᵣ) und eines Resonanzkondensators (Cᵣ) zwischen den ersten und den zweiten Verbindungsknoten geschaltet ist;
eine LC-Resonanzkreiseinheit (30), die mit der Vollbrücken-Wechselrichtereinheit (20) verbunden ist, um Frequenzcharakteristiken der von der Vollbrücken-Wechselrichtereinheit (20) gelieferten Wechselspannung unter Verwendung eines Resonanzphänomens des Resonanzinduktors (Lᵣ) und des Resonanzkondensators (Cᵣ) umzuwandeln;
einen Transformator (TX) mit einer Primärwicklung (TX1), die mit der LC-Resonanzkreiseinheit (30) verbunden ist, und einer Sekundärwicklung (TX2) mit einem bestimmten Windungsverhältnis in Bezug auf die Primärwicklung (TX1); und
eine Vollbrücken-Gleichrichtungseinheit (40) mit einer Vielzahl von Gleichrichterdioden (RD) zum Gleichrichten einer auf einer Sekundärseite des Transformators (TX) induzierten Wechselspannung in eine Gleichspannung,
wobei die Vollbrücken-Gleichrichtungseinheit (40) mit der Vielzahl von Gleichrichterdioden (RD), die in Reihe geschaltet sind, Kondensatoren (C_{b}) umfasst, die an beiden Enden jeder Gleichrichterdiode (RD) angeordnet sind, um eine Wellenform eines Resonanzstroms und von Ausgleichsspannungen zwischen den Gleichrichterdioden (RD) zu verbessern;
**gekennzeichnet durch**
eine Ausfalldetektionsschaltung, die umfasst:
eine Detektionseinheit (22, 24) mit einer ersten Stromerfassungsschaltung (21), die zwischen dem ersten Verbindungsknoten des Paars von Schaltern (S1, S3) der Vollbrücken-Wechselrichtereinheit (20) und dem dritten Verbindungsknoten des Paars von Beschaltungskondensatoren (C1, C3), die mit dem Paar von Schaltern (S1, S3) parallel geschaltet sind, verbindet, und einer zweiten Stromerfassungsschaltung (23), die zwischen den zweiten Verbindungsknoten des anderen Paars von Schaltern (S2, S4) der Vollbrücken-Wechselrichtereinheit (20) und den vierten Verbindungsknoten des anderen Paars von Beschaltungskondensatoren (C2, C4), die mit dem anderen Paar von Schaltern (S2, S4) parallel geschaltet sind, geschaltet ist, und die Strom- und Spannungszustände der ersten Stromerfassungsschaltung (21) und der zweiten Stromerfassungsschaltung (23) detektiert; und
eine Signalverarbeitungseinheit, die ein Signal, das angibt, ob eine Anomalität mit hartem Umschalten der Schalter (S1, S2, S3, S4) oder einem Schenkelkurzschluss der Schaltung innerhalb des Wandlers auftritt, durch Vergleichen der Summe von Strömen, die in der ersten Stromerfassungsschaltung (21) und der zweiten Stromerfassungsschaltung (23) fließen, oder der Summe von Spannungen an der ersten Schaltung (21) und der zweiten Stromerfassungsschaltung (23) von einem Signal der Detektionseinheit (22, 24) mit einem Referenzwert (V_{ref}) ausgibt.

2. Resonanzwandler nach Anspruch 1, wobei die Detektionseinheit zwei Transformatoren (22, 24) mit der ersten Stromerfassungsschaltung (21) und der zweiten Stromerfassungsschaltung (23) umfasst, die auf einer Primärseite davon angeordnet sind und Sekundärspulen (22a, 24a) umfassen, die miteinander in Reihe geschaltet sind, und die zweiten Spulen (22a, 24a) der Transformatoren (22, 24), die in Reihe geschaltet sind, mit der Signalverarbeitungseinheit verbunden sind.

3. Resonanzwandler nach Anspruch 2, wobei die Sekundärspulen (22a, 24a) der Transformatoren (22, 24), die in Reihe geschaltet sind, mit einem Erdungswiderstand (R) verbunden sind, und die Signalverarbeitungseinheit einen Vergleicher (26) umfasst, der einen über die in Reihe geschalteten Sekundärspulen (22a, 24a) des Transformators (22, 24) eingegebenen Spannungswert mit einem Referenzwert (V_{ref}) vergleicht, um ein Signal auszugeben.

4. Resonanzwandler nach Anspruch 3, wobei der Vergleicher (26) mit einer Steuereinheit (50) verbunden ist und die Steuereinheit dazu ausgelegt ist zu bestimmen, dass die Anomalität im Wandler auftritt, unter Verwendung des Signals des Vergleichers (26), das ausgegeben wird, wenn die über die Sekundärspulen (22a, 24a) eingegebene Spannung gleich oder größer als der Referenzwert (V_{ref}) ist.

5. Resonanzwandler nach Anspruch 4, wobei die Steuereinheit (50) dazu ausgelegt ist, die Schalter (S1, S2, S3, S4) der Vollbrücken-Wechselrichtereinheit (20) durch eine Gate-Ansteuerschaltungseinheit (51) auszuschalten, wenn die Steuereinheit (50) bestimmt, dass die Anomalität im Wandler auftritt.

6. Resonanzwandler nach Anspruch 2, wobei die Transformatoren (22, 24) so ausgelegt sind, dass sie Kerne (22b, 24b) umfassen, die mit den Sekundärspulen (22a, 24a) bewickelt sind, die isoliert an einer gedruckten Leiterplatte (1) mit der darauf ausgebildeten ersten Stromerfassungsschaltung (21) und zweiten Stromerfassungsschaltung (23) befestigt sind.

7. Resonanzwandler nach Anspruch 6, wobei die Kerne (22b, 24b) eine "U"-Form aufweisen und fest an der gedruckten Leiterplatte (1) an Endabschnitten von Schenkeln der Kerne (22b, 24b) befestigt sind, so dass mittlere Abschnitte der Kerne (22b, 24b), die mit den Sekundärspulen (22a, 24a) bewickelt sind, Muster der Schaltungen auf der gedruckten Leiterplatte (1) überkreuzen.

## Revendications

1. Convertisseur résonant comprenant :
une unité d'onduleur à pont intégral (20) comprenant une pluralité de commutateurs S1 à S4 convertissant une tension CC en une tension CA par commutation alternée ; l'unité d'onduleur à pont intégral (20) comprenant deux bras, un bras comprenant une première paire de commutateurs en connexion en série (S1, S3), l'autre bras comprenant une seconde paire de commutateurs en connexion en série (S2, S4),
un premier nœud de connexion est agencé entre la première paire de commutateurs (S1, S3),
un deuxième nœud de connexion est agencé entre la seconde paire de commutateurs (S2, S4),
une connexion en série de deux condensateurs d'amortissement (C1, C3) avec un troisième nœud de connexion entre les condensateurs, et
une connexion en série de deux condensateurs d'amortissement (C2, C4) avec un quatrième nœud de connexion entre les condensateurs
sont agencées en parallèle aux première et seconde paires de commutateurs,
une connexion en série d'un inducteur de résonance (Lᵣ) et d'un condensateur de résonance (Cᵣ) est connectée entre les premier et deuxième nœuds de connexion ;
une unité de circuit de résonance LC (30) connectée à l'unité d'onduleur à pont intégral (20) pour convertir des caractéristiques de fréquence de la tension CA délivrée depuis l'unité d'onduleur à pont intégral (20) à l'aide d'un phénomène de résonance de l'inducteur de résonance (Lᵣ) et du condensateur de résonance (Cᵣ) ;
un transformateur (TX) comprenant un enroulement primaire (TX1) connecté à l'unité de circuit de résonance LC (30) et un enroulement secondaire (TX2) avec un certain rapport de tours par rapport à l'enroulement primaire (TX1) ; et
une unité de redressement à pont intégral (40) comprenant une pluralité de diodes de redressement (RD) pour redresser une tension CA induite au niveau d'un côté secondaire du transformateur (TX) en une tension CC,
dans lequel l'unité de redressement à pont intégral (40) comprenant la pluralité de diodes de redressement (RD) connectées en série comprend des condensateurs (C_{b}) disposés aux deux extrémités de chaque diode de redressement (RD) pour améliorer une forme d'onde d'un courant de résonance et équilibrer les tensions entre les diodes de redressement (RD) ;
**caractérisé par**
un circuit de détection de défaillance comprenant :
une unité de détection (22, 24) comprenant un premier circuit de détection de courant (21) faisant la connexion entre le premier nœud de connexion de la paire de commutateurs (S1, S3) de l'unité d'onduleur à pont intégral (20) et le troisième nœud de connexion de la paire de condensateurs d'amortissement (C1, C3) connectés en parallèle à la paire de commutateurs (S1, S3) et un second circuit de détection de courant (23) connecté entre le deuxième nœud de connexion de l'autre paire de commutateurs (S2, S4) de l'unité d'onduleur à pont intégral (20) et le quatrième nœud de connexion de l'autre paire de condensateurs d'amortissement (C2, C4) connectés en parallèle à l'autre paire de commutateurs (S2, S4) et détectant des états de courant et de tension du premier circuit de détection de courant (21) et du second circuit de détection de courant (23) ; et
une unité de traitement de signal émettant un signal indiquant si une anomalie comprenant une communication difficile des commutateurs (S1, S2, S3, S4) ou un court-circuit du circuit à l'intérieur du convertisseur se produit en comparant la somme de courants s'écoulant dans le premier circuit de détection de courant (21) et second circuit de détection de courant (23) ou la somme de tensions au niveau du premier circuit (21) et du second circuit de détection de courant (23) provenant d'un signal de l'unité de détection (22, 24) à une valeur de référence (V_{ref}).

2. Convertisseur résonant selon la revendication 1, dans lequel l'unité de détection comprend deux transformateurs (22, 24) comprenant le premier circuit de détection de courant (21) et second circuit de détection de courant (23) disposés au niveau d'un côté primaire de ceux-ci et comprenant des bobines secondaires (22a, 24a) connectées en série entre elles, et les secondes bobines (22a, 24a) des transformateurs (22, 24) connectées en série sont connectées à l'unité de traitement de signal.

3. Convertisseur résonant selon la revendication 2, dans lequel les bobines secondaires (22a, 24a) des transformateurs (22, 24) connectées en série sont connectées à une résistance de mise à la terre (R), et l'unité de traitement de signal comprend un comparateur (26) qui compare une valeur de tension entrée via les bobines secondaires (22a, 24a) du transformateur (22, 24) connectées en série à une valeur de référence (V_{ref}) pour émettre un signal.

4. Convertisseur résonant selon la revendication 3, dans lequel le comparateur (26) est connecté à un dispositif de commande (50), et le dispositif de commande est configuré pour déterminer que l'anomalie se produit dans le convertisseur à l'aide du signal du comparateur (26) émis quand la tension entrée via les bobines secondaires (22a, 24a) est égale ou supérieure à la valeur de référence (V_{ref}) .

5. Convertisseur résonant selon la revendication 4, dans lequel le dispositif de commande (50) est configuré pour désactiver les commutateurs (S1, S2, S3, S4) de l'unité d'onduleur à pont intégral (20) par l'intermédiaire d'une unité de circuit d'entraînement à grille (51) quand le dispositif de commande (50) détermine que l'anomalie se produit dans le convertisseur.

6. Convertisseur résonant selon la revendication 2, dans lequel les transformateurs (22, 24) sont configurés pour comprendre des noyaux (22b, 24b) enroulés avec les bobines secondaires (22a, 24a) attachés de manière isolée à une carte de circuit imprimé (1) comprenant le premier circuit de détection de courant (21) et le second circuit de détection de courant (23) formés sur celle-ci.

7. Convertisseur résonant selon la revendication 6, dans lequel les noyaux (22b, 24b) présentent une forme de U, et sont attachés à demeure à la carte de circuit imprimé (1) au niveau de parties d'extrémité de pattes des noyaux (22b, 24b) de telle sorte que des parties centrales des noyaux (22b, 24b) enroulés avec les bobines secondaires (22a, 24a) traversent des motifs des circuits sur la carte de circuit imprimé (1).
